# EUROPÄISCHE PATENTSCHRIFT

(11) **EP 1 885 582 B1**
(45) Veröffentlichungstag und Bekanntmachung des Hinweises auf die Patenterteilung: **22.04.2009**
(21) Anmeldenummer: 06753725.8
(22) Anmeldetag: 18.05.2006
(51) Int. Cl.: B60R 21/16

(54) **AIRBAGANORDNUNG**
AIRBAG SYSTEM
SYSTEME D'AIRBAG

(30) Priorität: 01.06.2005 DE 102005025553
(43) Veröffentlichungstag der Anmeldung: 13.02.2008
(73) Patentinhaber: AUTOLIV DEVELOPMENT AB, 447 83 Vargarda (SE)
(72) Erfinder: Boström, Ola, S-441 57 Alingsas (SE); Johansson, Jack, S-438 91 Landvetter (SE)
(74) Vertreter: Stornebel, Kai
(86) Internationale Anmeldenummer: PCT/EP2006/004743
(87) Internationale Veröffentlichungsnummer: WO 2006/128591

(56) Entgegenhaltungen:
- DE-A1- 10 007 343
- DE-A1- 10 038 088
- DE-A1- 19 525 441
- DE-A1- 19 541 513
- DE-A1- 19 916 850
- US-A- 5 172 790
- US-A- 5 730 458

## Beschreibung

Die Erfindung betrifft eine Airbaganordnung in einem Kraftfahrzeug mit einem Airbag und einem Gasgenerator, der nach einer Aktivierung den Airbag mit Gas befüllt, wobei der Airbag zwischen zwei benachbarten Sitzpositionen für Fahrzeuginsassen angeordnet ist.

Die US 5,172,790 welche dem Oberbegriff des Anspruchs 1 entspricht, beschreibt unter anderem einen Airbag, der in einer Mittelkonsole zwischen zwei Fahrzeugsitzen angeordnet ist. Nach Auslösen des Gasgenerators entfaltet sich der Airbag und schiebt sich ballonförmig zwischen die Sitze bzw. die Sitznutzer. Der Airbag ist dabei in einem Gehäuse innerhalb der Mittelkonsole angeordnet.

Aus der DE 100 07 343 A1, welche ebenfalls dem Oberbegriff des Anspruchs 1 entspricht, ist eine Sicherheitseinrichtung für Insassen eines Fahrzeuges bekannt, bei der eine Airbaganordnung im Bereich des Mitteltunnels des Fahrzeuges zwischen zwei benachbarten Sitzpositionen angeordnet ist. Der Airbag dient dabei als Roll-over-Schutz und erstreckt sich über die Köpfe der Fahrzeuginsassen hinweg.

Aufgabe der vorliegenden Erfindung ist es, eine Airbaganordnung bereitzustellen, die möglichst wenig Nutzraum innerhalb eines Fahrzeuges beansprucht und ein schnelles und präzises Öffnen und Entfalten des Airbags gewährleistet.

Erfindungsgemäß wird diese Aufgabe durch eine Airbaganordnung in einem Kraftfahrzeug mit einem Airbag und einem Gasgenerator, der nach einer Aktivierung den Airbag mit Gas befüllt, wobei der Airbag zwischen zwei benachbarten Sitzpositionen für Fahrzeuginsassen angeordnet ist, gelöst, indem der Airbag in einem aufklappbaren Deckel einer Mittelkonsole oder einer Armlehne angeordnet ist. Dadurch ist es möglich, den Airbag in unmittelbarer Nähe der Fahrzeuginsassen oder Sitznutzer zu entfalten, so dass sehr schnell ein Kontakt zu dem Fahrzeugnutzer hergestellt werden kann. Darüber hinaus dient der Airbag als Polsterung, so dass der Deckel bequem als Armablage genutzt werden kann. Durch die Aufklappbarkeit des Deckels ist es möglich, in der Mittelkonsole oder in der Armlehne einen Stauraum vorzusehen, der zur Ablage von Gegenständen genutzt werden kann. Die Anordnung des Airbags in einer klappbaren Armlehne bewirkt, dass auch im aufgeklappten Zustand bei Zündung des Gasgenerators die Armlehne heruntergeklappt wird und der Airbag sich zwischen die Sitznutzer erstreckt.

Eine Weiterbildung der Erfindung sieht vor, dass auch der Gasgenerator in oder an dem Deckel angeordnet ist, so dass der Deckel als komplettes Modul zusammen mit dem Airbag und dem Gasgenerator geliefert und montiert werden kann.

Insbesondere bei einer Anordnung des Gasgenerators auf oder in dem Deckel der Mittelkonsole oder der Armlehne ist es vorgesehen, dass der Airbag oberhalb des Gasgenerators zur Abpolsterung angeordnet ist, wobei der Airbag im zusammengefalteten Zustand von einer Hülle umgeben ist, die zumindest eine Sollrisslinie aufweist, so dass der Airbag beim Aufblasen an einer bestimmten Stelle leicht aus der Hülle austreten kann. Zur Unterstützung des Aufreiß- und Aufklappvorganges ist in der Hülle zumindest ein Scharnier oder Filmscharnier ausgebildet, so dass nach Durchtrennen der Sollrisslinie die Hülle entlang des Filmscharniers oder der Filmscharniere aufklappt. Oberhalb des Airbags kann eine Polsterschicht vorgesehen sein, die von der Sollrisslinie durchsetzt ist.

Zur stabilen Anordnung des Airbags an der Mittelkonsole oder Armlehne ist es vorgesehen, dass der Airbag unter Bildung einer Basisfläche an dem Deckel befestigt ist, so dass der entfaltete Airbag aufgeblasen in einer stabilen Position gehalten werden kann. Dies ist gegenüber einer nur punkt- oder linienförmigen Befestigung vorteilhaft. Ist die Basisfläche rechteckig, entfaltet sich der Airbag oberhalb dieser Basisfläche entsprechend säulenförmig. Um die Befestigung wirksam zu gestalten, ist der Airbag über einen Rahmen an dem Deckel befestigt, beispielsweise mit dem Deckel verschraubt oder über eine andere formschlüssige Verbindung, beispielsweise eine Klipsverbindung, daran befestigt.

Um den Abdomenbereich des Sitznutzers oder der Sitznutzer zu schonen, ist es vorgesehen, dass in dem Airbag zumindest ein Fangband angeordnet ist, das ein Ausbeulen des Airbags in Richtung auf den Sitznutzer verhindert. Bei einem Seitenaufprall ist es die Aufgabe eines zwischen zwei Sitznutzern angeordneten Airbags, ein seitliches Hinausgleiten aus dem diagonalen Schultergurt abzufangen oder zu verhindern und den Sitznutzer an den Sitz zu koppeln. Dazu ist es nicht notwendig, den Abdomenbereich abzustützen, vielmehr ist eine schnelle Kopplung des Airbags mit dem Schulterbereich vorzusehen. Um Gasvolumen nicht unnötig einzusetzen, werden die Fangbänder so angeordnet, dass in Vertikalrichtung zunächst ein relativ schmaler Airbag entsteht, der sich nach oben hin aufweitet und bevorzugt im Brustbereich des Sitznutzers zum Kontakt kommt. Dabei ist es vorgesehen, dass ein Basisbereich unmittelbar oberhalb des Deckels der Mittelkonsole oder der Armlehne vorhanden ist, der in Vertikalerstreckung ungefähr den Abdomenbereich des Sitznutzers überdeckt. Ein Kontakt des Airbags im Abdomenbereich des Sitznutzers wird damit verhindert. Oberalb des Basisbereiches weitet sich der Airbag auf und wird wesentlich breiter als die Breite des Deckels ist. Der Basisbereich ist im Wesentlichen so breit wie der Deckel, an dem der Airbag befestigt ist.

Auch ist es möglich, dass der Airbag im entfalteten Zustand einen trapezförmigen Querschnitt aufweist, wobei die schmalere Grundlinie des trapezförmigen Querschnittes an dem Deckel angeordnet ist, während die breitere Grundlinie auf der dem Deckel abgewandten Seite des Airbags ausgebildet ist. Der entfaltete Airbag hat also eine kleine Grundfläche, die an dem Deckel festgelegt ist, und eine große Grundfläche, die dem Thoraxbereich des Sitznutzers zugeordnet ist. Dabei ist es vorgesehen, dass die breitere Grundlinie oder der verbreiterte, obere Bereich des Airbags sich bis unterhalb des Schulterbereichs der Sitznutzer erstreckt, also zur Anlage an den Brustbereich des Sitznutzers kommt.

Eine Ausgestaltung der Erfindung sieht vor, dass der Airbag im befüllten Zustand einen Fülldruck von wenigstens 1 bar aufweist, beispielsweise 1 bar bis 3bar, wobei er eine Größe von 6 I bis 15 I hat. Um die eventuell auf der Mittelkonsole oder der Armlehne abgestützten Gliedmaßen nicht zu schädigen, weist der Airbag eine relativ langsame Entfaltungszeit von mehr als 30 ms auf, wobei vorgesehen ist, dass der Airbag und der Gasgenerator so ausgelegt sind, dass der Airbag erst nach 40 ms mit 1 bar Überdruck befüllt ist.

Da der Airbag eher eine Stützfunktion als eine Kissenfunktion hat, wird während des Aufblasvorganges keine Ventilation vorgesehen, so dass der Airbag relativ lange den Gasdruck aufrecht hält. Leckagebedingt wird das Gas nach dem Unfallszenario langsam entweichen. Der Airbag ist mit einer Steuereinheit verbunden, die wiederum mit Sensoren verbunden ist, die einen Seitenaufprall und/oder einen Überschlag sensieren. Des Weiteren kann ein Sensor zur Insassenerkennung vorgesehen sein, der mit der Steuereinheit verbunden ist. Bei einem Seitenaufprall würde der Airbag aktiviert werden, wenn auf der unfallfernen Seite ein Insasse auf dem Sitz sensiert wird. Wenn kein Insasse sensiert wird, erfolgt keine Aktivierung des Airbags.

Nachfolgend werden Ausführungsbeispiele der Erfindung anhand der beigefügten Figuren näher erläutert. Es zeigen:
- Figur 1 -: eine grundsätzliche Anordnung eines Airbags in einer Mittelkonsole;
- Figur 2 -: einen Querschnitt durch eine Detaildarstellung eines zu- sammengefalteten Airbags;
- Figur 3 -: eine schematische Darstellung einer ersten Ausführungsform des Airbags;
- Figur 4 -: eine Variante der Figur 3; sowie
- Figuren 5a - g -: Anordnungen von Fangbändern innerhalb eines Airbags.

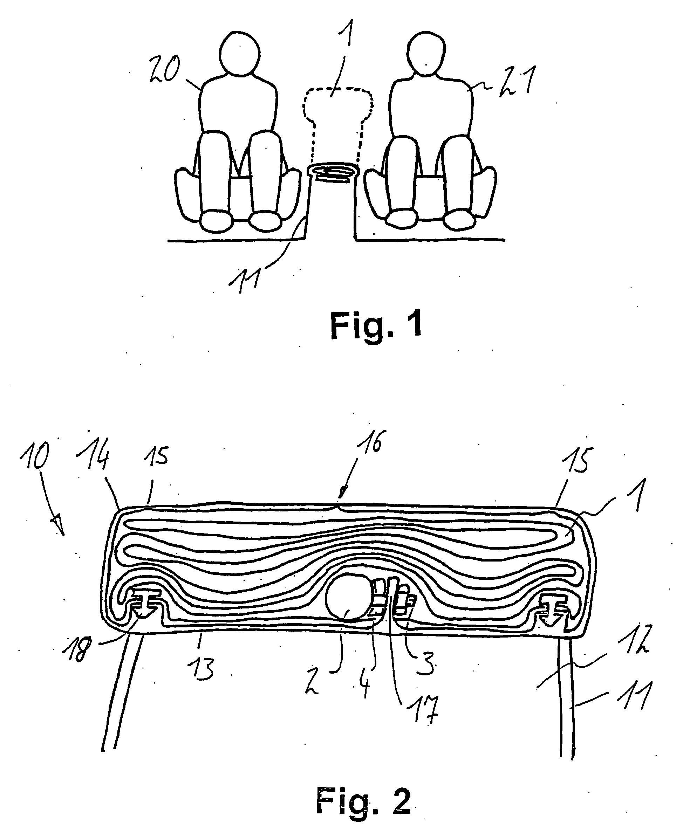

Figur 1 zeigt eine mögliche Darstellung eines Kraftfahrzeuges mit zwei Fahrzeuginsassen 20, 21, zwischen denen eine Mittelkonsole 11 oder eine Armlehne angeordnet ist. Im oberen Bereich der Mittelkonsole 11 oder der Armlehne ist ein Airbag 1 zusammen mit einem Gasgenerator angebracht. Die durchgezogene Linie zeigt den Airbag 1 im zusammengefalteten Zustand, während die Strichpunktlinie den Airbag 1 im entfalteten Zustand zeigt. Nach Zündung des Gasgenerators entfaltet sich der Airbag 1 in vertikaler Richtung nach oben und erstreckt sich zwischen die Sitznutzer 20, 21, wobei der Querschnitt des Airbag 1 T-förmig oder pilzförmig ausgebildet ist, so dass der obere Bereich des Airbags 1 breiter als der untere Bereich ist. Dadurch ist es möglich, schnell mit dem Brustbereich der Sitznutzer 20, 21 in Kontakt zu treten.

Eine Detaildarstellung der Anordnung eines Airbags 1 in einem Deckel 10 einer Mittelkonsole 11 ist in der Figur 2 dargestellt. Der Deckel 10 weist eine Grundplatte 13 auf, an der über Klipsverbinder 18 oder Schrauben ein Airbag 1 an der Grundplatte 13 festgelegt ist. Von der Grundplatte 13 erstreckt sich eine Hülle 14 um den zusammengefalteten Airbag 1. In der Hülle 14 ist eine Sollrisslinie 16 in Längserstreckung, also in Fahrtrichtung des Kraftfahrzeuges, ausgebildet. Parallel dazu sind Filmscharniere 15 beiderseits an dem Rand des Deckels 10 ausgebildet, um ein Aufklappen der Hülle 14 beiderseits der Sollrisslinie 16 zu erleichtern. Ebenfalls in der Hülle 14 eingeschlossen ist ein Gasgenerator 2, der über einen Schraubbolzen 3 und ein Distanzstück 4 an einem Befestigungszapfen 17, der einstückig mit der Grundplatte 13 ausgebildet ist, an dem Deckel 10 befestigt ist. Alternativ zu einer unmittelbaren Befestigung des Airbags 1 über Klipsverbinder 18 ist die Befestigung über einen umlaufenden Rahmen möglich, der an dem Deckel 10 festschraubbar ist. Dadurch wird eine umlaufende Befestigung des Airbags 1 an dem Deckel 10 unter Bildung einer Basisfläche es Airbags 1 gewährleistet. Im entfalteten Zustand hat der Airbag 1 dann eine stabile Grundfläche.

Der Deckel 10 ist klappbar an der Mittelkonsole 11 ausgebildet und verschließt einen Hohlraum 12, der zur Aufnahme von Gegenständen genutzt werden kann. Der fertig montierte Deckel 10 mit Airbag 1, Gasgenerator 2 und der Hülle 14 kann als fertiges Modul geliefert werden. Der zusammengeklappte und gefaltete Airbag 1 dient als Polster zur Abpolsterung des Gasgenerators 2. Es kann jedoch auch ein zusätzliches Polster eingearbeitet sein.

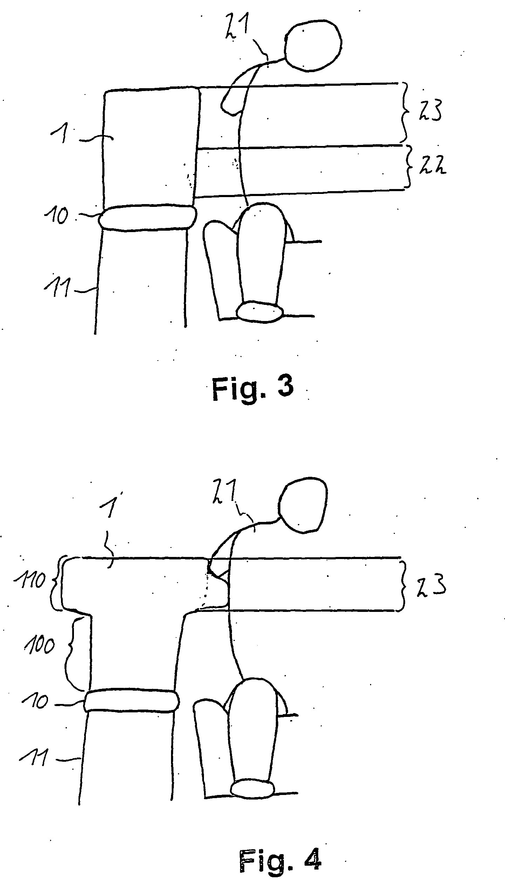

In den Figuren 3 und 4 ist der Airbag 1 im entfalteten Zustand gezeigt, in der er sich oberhalb des Deckels 10 und oberhalb der Mittelkonsole 11 in vertikaler Richtung erstreckt. In der Ausführungsform gemäß Figur 3 ist die Breite des Airbags im Wesentlichen gleich der Breite des Deckels 10, was heißt, dass ein im Wesentlichen kastenförmiger Airbag sich zwischen die Sitznutzer 20, 21 schiebt und den Zwischenraum zwischen den Oberkörpern der Sitznutzer nahezu ausfüllt. Aufgrund der physiologischen Gegebenheiten eines Sitznutzers 21 ist dadurch eine größere Nähe des Brustbereiches 23 zu dem Airbag 1 als des Abdomenbereiches 22 des Sitznutzers 21 gegeben. Dadurch wird vermieden, dass der dem Abdomenbereich 22 zugeordnete Abschnitt des Airbags 1 in Kontakt mit dem Sitznutzer 21 tritt, wodurch eine Verletzungsgefahr vermieden werden kann.

In einer Weiterbildung, die in der Figur 4 gezeigt ist, hat der Airbag 1 eine T-förmige Querschnittsform, bei der ein Basisbereich 100, der sich unmittelbar oberhalb des Deckels 10 anschließt, im Wesentlichen die Breite des Deckels 10 hat, während ein sich daran anschließender Kontaktbereich 110 seitlich verbreitert ist und somit im entfalteten Zustand bei einer normalen Sitzposition des Sitznutzers 21 in Kontakt mit dem Brustbereich 23 des Sitznutzes 21 oder der Sitznutzer 20, 21 tritt. Erfolgt nun gemäß der Figuren 3 und 4 ein Aufprall eines Fahrzeuges von links, würde ohne Airbag 1 der Sitznutzer 21 aufgrund seiner Trägheit an Ort und Stelle verbleiben, während sich das Fahrzeug insgesamt nach rechts bewegen würde. Aufgrund der diagonalen Anordnung des nicht dargestellten Schultergurtes besteht die Gefahr, dass der Sitznutzer 21 aus dem Schultergurt herausrutscht und auf den neben ihn sitzenden Sitznutzer 20 ungebremst aufprallt. Dies wird durch den Airbag 1 verhindert, der den Sitznutzer 21 in seiner Sitzposition hält.

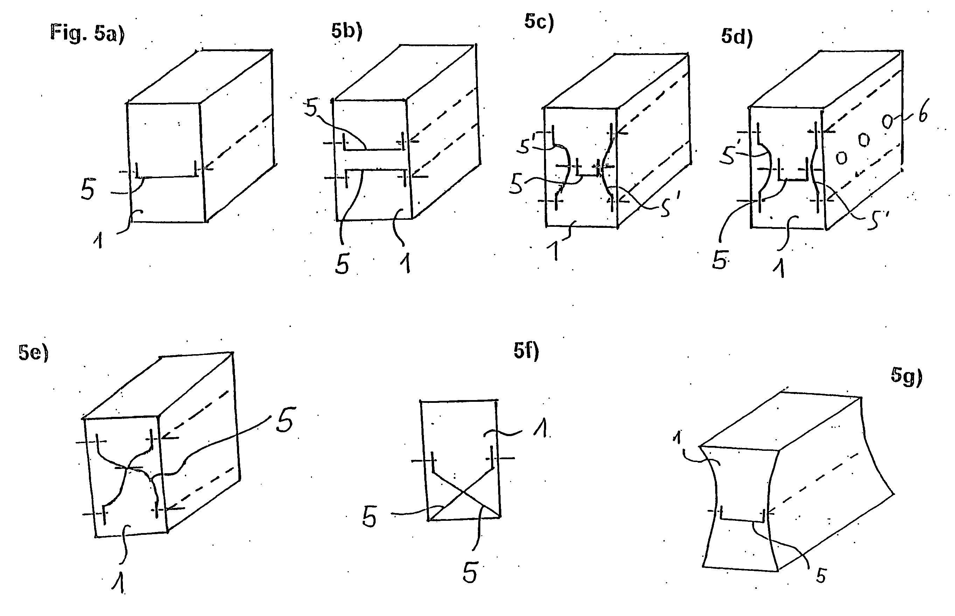

Um die Form des Airbags 1 im entfalteten Zustand nach den Erfordernissen gestalten zu können, sind in den Figuren 5a bis 5g verschiedene Varianten dargestellt. Die Fangbänder 5 sind grundsätzlich so ausgebildet, dass im aufgeblasenen Zustand eine Ausbeulung des Airbags 1 nach außen verhindert wird, gegebenenfalls sind die Dimensionen so gewählt, dass eine Einschnürung im Abdomenbereich 22 bzw. auf der Höhe des Abdomenbereiches 22 vorliegen, wie in der Figur 5g angedeutet. Es können mehrere Fangbänder 5 innerhalb des Airbags 1 angeordnet sein. Die Variante gemäß Figur 5f mit gekreuzten Fangbändern 5 hat den Vorteil, dass sie den Airbag 1 zusätzlich stabilisiert, da die Fangbänder 5 an dem Deckel 10 befestigt sind. Es können mehrere Fangbänder 5 in dem Airbag 1 vorgesehen sein, wie in den Figuren 5b bis 5f gezeigt ist. Sich kreuzende Fangbänder 5, wie in den Figuren 5e und 5f gezeigt, erhöhen die Stabilität der Airbags 1. Die Anordnung von Haltefangbändern 5' wie in Figuren 5c und 5d, an denen ein Fangband 5 befestigt ist, verringert das aufzublasende Volumen und beschleunigt das Aufblasen des Airbags 1 im Thoraxbereich 23. Die Haltefangbänder 5' können die Entfaltungshöhe begrenzen oder den Abdomenbereich 22 weniger hart gestalten. Auch können Lüftungslöcher 6 im Airbag 1 vorgesehen sein.

Der Gasgenerator 2 und der Airbag 1 sind so ausgebildet, dass eine relativ langsame Entfaltung und ein langsames Befüllen des Airbags 1 mit dem Gas erfolgt. Während eine normale Entfaltungsgeschwindigkeit bei einem Seitenairbag bei 10 ms bis 15 ms liegt, ist der vorgeschlagene Airbag für eine Entfaltungszeit von mehr als 30 ms vorgesehen. Dadurch können auf dem Deckel 10 abgelegte Körperteile relativ sanft während des Entfaltens zur Seite geschoben werden, ohne die Gefahr einer Verletzung herbeizuführen. Die vorgesehene Airbaganordnung kann so ausgelegt sein, dass der Airbag erst nach mehr als 40 ms mit 1 bar Überdruck befüllt ist, wobei ein Maximaldruck von 3 - 5 bar bei einer Größe des Airbags von 6I bis 15I, vorzugsweise 81 bis 12I, vorgesehen ist.

Der Airbag kann auch im aufgeklappten Zustand des Deckels 10 aktiviert werden, wobei bei der Aktivierung des Airbags 1 der Deckel 10 heruntergeklappt und üblicherweise wieder an der Mittelkonsole 11 oder Armlehne verriegelt wird. Durch das Zuklappen des Deckels 10 bewegt sich der Airbag 1 selbstständig in die gewünschte Position zwischen die Fahrzeuginsassen 20, 21.

Das Zuklappen kann entweder automatisch durch die Aktivierung des Airbags oder durch aktives Zuklappen während der Aktivierung geschehen. Das aktive Klappen kann wiederum durch einen separaten Aktivator (Motor) und durch einen Hebelmechanismus geschehen, der von dem Airbag oder dem Gasstrom aus dem Gasgenerator betätigt wird.

Da der Airbag mit einem relativ hohen Gasdruck befüllt wird, muss das den Airbag formende Material relativ widerstandsfähig und dicht ausgebildet sein. Ein dichtes, schweres Gewebe mit einer Beschichtung auf der Innenseite ist beispielhaft verwendbar. Alternativ kann der Airbag auch aus Metall oder Kunststoff geformt sein. Die gefalteten Wandbereiche würden sich in diesem Fall gezielt deformieren.

## Patentansprüche

1. Airbaganordnung in einem Kraftfahrzeug mit einem Airbag und einem Gasgenerator, der nach einer Aktivierung den Airbag mit Gas befüllt, wobei der Airbag zwischen zwei benachbarten Sitzpositionen für Fahrzeuginsassen angeordnet ist, **dadurch gekennzeichnet, dass** der Airbag (1) in einem aufklappbaren Deckel (10) einer Mittelkonsole (11) oder einem klappbaren Deckel (10) einer Armlehne angeordnet ist und der Deckel (10) zusammen mit dem Airbag (1) auf- und zugeklappt werden kann.

2. Airbaganordnung nach Anspruch 1, **dadurch gekennzeichnet, dass** der Gasgenerator (2) in dem Deckel (10) angeordnet ist.

3. Airbaganordnung nach Anspruch 1 oder 2, **dadurch gekennzeichnet, dass** der Airbag (1) im zusammengefalteten Zustand oberhalb des Gasgenerators (2) auf der Oberseite des Deckels (10) angeordnet ist.

4. Airbaganordnung nach einem der voranstehenden Ansprüche, **dadurch gekennzeichnet, dass** der Airbag (1) unter Bildung einer Basisfläche an dem Deckel (10) befestigt ist.

5. Airbaganordnung nach einem der voranstehenden Ansprüche, **dadurch gekennzeichnet, dass** der Airbag (1) über einen Rahmen an dem Deckel (10) befestigt ist.

6. Airbaganordnung nach einem der voranstehenden Ansprüche, **dadurch gekennzeichnet, dass** der Airbag (1) im zusammengefalteten Zustand von einer Hülle (14) umgeben ist, die zumindest eine Sollrisslinie (16) aufweist.

7. Airbaganordnung nach Anspruch 6, **dadurch gekennzeichnet, dass** in der Hülle (14) zumindest ein Scharnier, insbesondere Filmscharnier (15) ausgebildet ist.

8. Airbaganordnung nach einem der voranstehenden Ansprüche, **dadurch gekennzeichnet, dass** in dem Airbag (1) zumindest ein Fangband (5) angeordnet ist das, ein Ausbeulen des Airbags (1) in Richtung auf die Sitznutzer (20, 21) verhindert.

9. Airbaganordnung nach einem der voranstehenden Ansprüche, **dadurch gekennzeichnet, dass** der Airbag (1) im entfalteten Zustand in einem Basisbereich (100), der in Vertikalerstreckung dem Abdomenbereich (22) des Sitznutzers (20, 21) entspricht, eine Breite aufweist, die im Wesentlichen der Breite des Deckels (10) entspricht,

10. Airbaganordnung nach Anspruch 9, **dadurch gekennzeichnet, dass** der Airbag (1) im entfalteten Zustand sich oberhalb des Basisbereiches (100) in Richtung auf die Sitznutzer (20, 21) verbreitert.

11. Airbaganordnung nach einem der Ansprüche 1 bis 8, **dadurch gekennzeichnet, dass** der Airbag (1) im entfalteten Zustand einen trapezförmigen Querschnitt aufweist, wobei die schmalere Grundlinie an dem Deckel (10) angeordnet ist, während die breitere Grundlinie auf der dem Deckel (10) abgewandten Seite angeordnet ist.

12. Airbaganordnung nach Anspruch 10 oder 11, **dadurch gekennzeichnet, dass** sich der Airbag (1) an dem dem Deckel (10) gegenüberliegenden Ende bis zu dem Sitznutzer (20, 21) erstreckt.

13. Airbaganordnung nach einem der voranstehenden Ansprüche, **dadurch gekennzeichnet, dass** der Airbag (1) an dem Deckel (10) angeclipst oder angeschraubt ist.

14. Airbaganordnung nach einem der voranstehenden Ansprüche, **dadurch gekennzeichnet, dass** der Airbag (1) im befüllten Zustand einen Fülldruck von wenigstens 1 bar aufweist.

15. Airbaganordnung nach einem der voranstehenden Ansprüche, **dadurch gekennzeichnet, dass** der Airbag (1) eine Größe von 6 bis 15 Liter aufweist.

16. Airbaganordnung nach einem der voranstehenden Ansprüche, **dadurch gekennzeichnet, dass** der Airbag (1) eine Entfaltungszeit von mehr als 30ms hat.

17. Airbaganordnung nach einem der voranstehenden Ansprüche, **dadurch gekennzeichnet, dass** der Airbag (1) und der Gasgenerator (2) so ausgelegt sind, dass der Airbag (1) erst nach mehr als 40ms mit 1bar Überdruck befüllt ist.

18. Airbaganordnung nach einem der voranstehenden Ansprüche, **dadurch gekennzeichnet, dass** die Armlehne klappbar ist.

## Claims

1. Airbag arrangement in a motor vehicle with an airbag and gas generator, which, after an activation, fills the airbag with gas, the airbag being arranged between two adjacent sitting positions for vehicle occupants, **characterised in that** the airbag (1) is arranged in an openable lid (10) of a centre console (11) or an openable lid (10) of an armrest and the lid (10) together with the airbag (1) can be opened and closed.

2. Airbag arrangement according to claim 1, **characterised in that** the gas generator (2) is arranged in the lid (10).

3. Airbag arrangement according to claim 1 or 2, **characterised in that** the airbag (1), in the folded-up state, is arranged above the gas generator (2) on the upper side of the lid (10).

4. Airbag arrangement according to any one of the preceding claims, **characterised in that** the airbag (1) is fastened to the lid (10) with the formation of a base face.

5. Airbag arrangement according to any one of the preceding claims, **characterised in that** the airbag (1) is fastened to the lid (10) by means of a frame.

6. Airbag arrangement according to any one of the preceding claims, **characterised in that** the airbag (1), in the folded-up state, is surrounded by a covering (14), which has at least one predetermined tear line (16).

7. Airbag arrangement according to claim 6, **characterised in that** at least one hinge, in particular a film hinge (15), is formed in the covering (14).

8. Airbag arrangement according to any one of the preceding claims, **characterised in that** at least one retaining strap (5) is arranged in the airbag (1) and prevents the airbag (1) from bulging in the direction of the seat user (20, 21).

9. Airbag arrangement according to any one of the preceding claims, **characterised in that** the airbag (1), in the unfolded state, in a base region (100) corresponding in the vertical extent to the abdomen region (22) of the seat user (20, 21), has a width, which substantially corresponds to the width of the lid (10).

10. Airbag arrangement according to claim 9, **characterised in that** the airbag (1), in the unfolded state, widens above the base region (100) in the direction of the seat user (20, 21).

11. Airbag arrangement according to any one of claims 1 to 8, **characterised in that** the airbag (1), in the unfolded state, has a trapezoidal cross section, the narrower base line being arranged on the lid (10), while the wider base line is arranged on the side remote from the lid (10).

12. Airbag arrangement according to claim 10 or 11, **characterised in that** the airbag (1) extends up to the seat user (20, 21) at the end opposing the lid (10).

13. Airbag arrangement according to any one of the preceding claims, **characterised in that** the airbag (1) is clipped or screwed to the lid (10).

14. Airbag arrangement according to any one of the preceding claims, **characterised in that** the airbag (1), in the filled state, has a filling pressure of at least 1 bar.

15. Airbag arrangement according to any one of the preceding claims, **characterised in that** the airbag (1) has a size of 6 to 15 litres.

16. Airbag arrangement according to any one of the preceding claims, **characterised in that** the airbag (1) has an unfolding time of more than 30 ms.

17. Airbag arrangement according to any one of the preceding claims, **characterised in that** the airbag (1) and the gas generator (2) are designed in such a way that the airbag (1) is only filled with 1 bar of excess pressure after more than 40 ms.

18. Airbag arrangement according to any one of the preceding claims, **characterised in that** the armrest can be folded.

## Revendications

1. Agencement d'airbag dans un véhicule automobile avec un airbag et un générateur de gaz, qui remplit l'airbag de gaz après une activation, dans lequel l'airbag est agencé entre deux emplacements voisins de passagers assis, **caractérisé en ce que** l'airbag (1) est disposé dans un couvercle (10) relevable d'une console centrale (11) ou dans un couvercle (10) d'un accoudoir et que le couvercle (10) et l'airbag (1) peuvent être relevés et rabattus ensemble.

2. Agencement d'airbag selon la revendication 1, **caractérisé en ce que** le générateur de gaz (2) est disposé dans le couvercle (10).

3. Agencement d'airbag selon l'une quelconque des revendications 1 ou 2, **caractérisé en ce que** l'airbag (1) dans son état replié est disposé au dessus du générateur de gaz (2) sur le côté supérieur du couvercle (10).

4. Agencement d'airbag selon l'une quelconque des revendications précédentes, **caractérisé en ce que** l'airbag (1) est fixé sur le couvercle (10) sous la forme d'une surface de base.

5. Agencement d'airbag selon l'une quelconque des revendications précédentes, **caractérisé en ce que** l'airbag (1) est fixé sur le couvercle (10) par dessus un cadre.

6. Agencement d'airbag selon l'une quelconque des revendications précédentes, **caractérisé en ce que** l'airbag (1) dans son état replié est entouré par une enveloppe (14) qui présente au moins une ligne de déchirure préétablie (16).

7. Agencement d'airbag selon la revendication 6, **caractérisé en ce qu'**au moins une charnière, notamment une charnière par partie amincie (15), est réalisée dans l'enveloppe (14).

8. Agencement d'airbag selon l'une quelconque des revendications précédentes, **caractérisé en ce que** dans l'airbag (1) est disposée au moins une lanière de préhension (5) qui empêche l'expansion de l'airbag (1) dans la direction des occupants (20, 21) des sièges.

9. Agencement d'airbag selon l'une quelconque des revendications précédentes, **caractérisé en ce que** l'airbag (1) dans son état déplié présente, dans une région de base (100) qui couvre l'étendue verticale de la région abdominale (22) de l'occupant (20, 21) du siège, une largeur qui couvre sensiblement la largeur du couvercle (10).

10. Agencement d'airbag selon la revendication 9, **caractérisé en ce que** l'airbag (1) dans son état déplié s'élargit au dessus de la région de base (100) en direction des occupants (20, 21) des sièges.

11. Agencement d'airbag selon l'une quelconque des revendications 1 à 8, **caractérisé en ce que** l'airbag (1) dans son état déplié présente une section transversale trapézoïdale dans laquelle le côté étroit est disposé sur le couvercle (10) alors que le côté large est disposé du côté opposé au couvercle (10).

12. Agencement d'airbag selon l'une quelconque des revendications 10 ou 11, **caractérisé en ce que** l'airbag (1) s'étend depuis l'extrémité du couvercle (10) jusqu'à l'occupant (20, 21) du siège en vis-à-vis.

13. Agencement d'airbag selon l'une quelconque des revendications précédentes, **caractérisé en ce que** l'airbag (1) est clipsé ou vissé sur le couvercle (10).

14. Agencement d'airbag selon l'une quelconque des revendications précédentes, **caractérisé en ce que** l'airbag (1) dans son état rempli présente une pression de remplissage d'au moins 1 bar.

15. Agencement d'airbag selon l'une quelconque des revendications précédentes, **caractérisé en ce que** l'airbag (1) présente une contenance allant de 6 à 15 litres.

16. Agencement d'airbag selon l'une quelconque des revendications précédentes, **caractérisé en ce que** l'airbag (1) a une durée de dépliage de plus de 30 ms.

17. Agencement d'airbag selon l'une quelconque des revendications précédentes, **caractérisé en ce que** l'airbag (1) et le générateur de gaz (2) sont positionnés de façon à ce que l'airbag (1) n'est rempli d'une pression de 1 bar qu'après plus de 40 ms.

18. Agencement d'airbag selon l'une quelconque des revendications précédentes, **caractérisé en ce que** l'accoudoir est repliable.
